# EUROPÄISCHE PATENTSCHRIFT

(11) **EP 2 427 640 B1**
(45) Veröffentlichungstag und Bekanntmachung des Hinweises auf die Patenterteilung: **27.11.2019**
(21) Anmeldenummer: 10717166.2
(22) Anmeldetag: 07.05.2010
(51) Int. Cl.: F02N 9/04, F02N 19/02, F02D 19/10, F02M 21/04, F02B 19/10, F02B 29/04, F02B 37/00, F02N 19/04, F02N 19/10

(54) **VERFAHREN ZUM STARTEN EINER MIT BRENNGAS BETRIEBENEN BRENNKRAFTMASCHINE**
METHOD FOR STARTING AN INTERNAL COMBUSTION ENGINE DRIVEN BY A GASMOTOR
MÉTHODE POUR DÉMARRER UN MOTEUR À COMBUSTION ENTRAÎNÉ INTERNE PAR UN MOTEUR À GAZ

(30) Priorität: 07.05.2009 AT 6972009
(43) Veröffentlichungstag der Anmeldung: 14.03.2012
(73) Patentinhaber: AVL List GmbH, 8020 Graz (AT)
(72) Erfinder: BERGER, Manuel, A-4493 Wolfern (AT); BAUFELD, Torsten, A-8045 Graz (AT); MOHR, Hinrich, 21643 Beckdorf (DE)
(74) Vertreter: Babeluk, Michael
(86) Internationale Anmeldenummer: PCT/EP2010/056221
(87) Internationale Veröffentlichungsnummer: WO 2010/128125

(56) Entgegenhaltungen:
- WO-A2-01/86128
- DE-A1-102004 035 301
- US-A- 2 714 883
- US-A- 4 162 668
- US-A- 4 966 103
- US-A1- 2004 107 941

## Beschreibung

Die Erfindung betrifft ein Verfahren zum Starten einer mit Brenngas betriebenen Brennkraftmaschine mit innerer Verbrennung, insbesondere eines Großgasmotors, wobei die Bildung eines brennbaren Gas/Luft-Gemisches im Einlasssystem, insbesondere in einem Gasmischer stromaufwärts eines Laders, erfolgt, wobei während der Startphase in die Zylinderräume zumindest einer Gruppe von Zylindern zumindest zeitweise Druckluft eingeblasen wird.

Aus der JP 06 200 57 539 A ist ein Großgasmotor mit zwei V-förmig angeordneten Zylinderbänken bekannt, wobei während der Startphase eine erste Zylinderbank gefeuert und eine zweite Zylinderbank ungefeuert betrieben wird. Die zweite Zylinderbank wird dabei von der Kraftstoffversorgung getrennt und mit einer Druckluftversorgung verbunden.

Die US 2004/0 107 941 A1 beschreibt ein Startsystem für eine Pilot-gezündete Gasbrennkraftmaschine. Dabei wird während der Startphase gasförmiger Brennstoff über die Einlasskanäle zugeführt, sodass in der Hauptbrennkammer ein Kraftstoff-Luftgemisch entsteht, welches durch den Kolben innerhalb des Hauptbrennraumes komprimiert wird, welcher durch einen Starter bewegt wird. Ein Teil des komprimierten Kraftstoff-Luftgemisches gelangt in eine Vorbrennkammer und wird durch eingespritzten Pilot-Kraftstoff während der zweiten Hälfte des Verdichtungshubes gezündet. Nach Ablauf einer bestimmten Zeit nach der Startphase des Motors wird das Kraftstoff-Luftgemisch innerhalb der Hauptbrennkammer durch Zündkerzen gezündet.

Die DE 10 2004 035 301 A1 beschreibt einen zwei Takt-Dieselmotor. Zum Anlassen des Motors wird der Arbeitsraum aller oder ausgewählter Zylinder bei der Abwärtsbewegung des jeweils zugeordneten Kolbens mit Anlassluft beaufschlagt. Dabei handelt es sich um Pressluft, die in Anlassluftflaschen bereitgehalten wird, denen Kompressoren zugeordnet sind. Mithilfe der Kompressoren werden die Anlassluftflaschen im normalen Betrieb aufgeladen. Dem Motor ist eine Umschalteinrichtung zugeordnet, durch welche beim Anlassen des Motors eine Umschaltung von der Anlassbetriebsweise auf die Einspritzbetriebsweise bewerkstelligt wird. Die Umschalteinrichtung wird ausgelöst, sobald beim Anlassvorgang eine vorgegebene Drehzahl der Kurbelwelle erreicht ist. Beim Übergang von der Anlassbetriebsweise auf die Einspritzbetriebsweise werden nicht alle Zylinder gleichzeitig umgeschaltet, sondern in Abhängigkeit von der Kolbenstellung phasenverschoben und zwar derart, dass der bzw. die Zylinder, deren bzw. dessen Kolben bei Auslösung der Umschalteinrichtung noch die Möglichkeit haben, innerhalb des Arbeitszyklus, in dem die Auslösung der Umschalteinrichtung fällt, einen vollständigen Verdichtungshub durchzuführen. In der Einspritzbetriebsweise wird im Bereich des oberen Totpunkts Brennstoff in den Brennraum eingespritzt. In der Anlassbetriebsweise ist dabei die Abgasauslassöffnung wesentlich länger geöffnet als in der Einspritzbetriebsweise, um sicher zu stellen, dass beim Aufwärtshub des Kolbens keine Verdichtung erfolgt.

Die Veröffentlichung US 4,162,668 A offenbart eine Mehrzylinderdiesel-Brennkraftmaschine mit einem Abgasturbolader, wobei ein Teil der Ladeluft in einem Startluftspeicher gespeichert wird. Während des Startens der Brennkraftmaschine wird komprimierte Ladeluft aus dem Startluftspeicher den Einlassventilen zugeführt, wodurch die komprimierte Luft auf die Kolben der entsprechenden Zylinder einwirkt und die Kurbelwelle in Drehung versetzt. Sobald die Drehzahl der Brennkraftmaschine eine definierte Startdrehzahl erreicht, wird die Versorgung der Zylinder mit verdichteter Luft aus den Startluftspeichern unterbrochen, wobei die Aufladung der Zylinder nur mehr durch den Abgasturbolader erfolgt.

Die Druckschrift US 4,966,103 A offenbart eine Zweistoff-Brennkraftmaschine, die als eine Hubkolben-Brennkraftmaschine ausgelegt ist, und welche sowohl einen gasförmigen Brennstoff, als auch einen flüssigen Brennstoff nutzen kann. Zum Zünden des gasförmigen Brennstoffs weist die Brennkraftmaschine eine extern angeordnete Brennerzelle auf, welche über eine Öffnungseinrichtung mit einem Zylinder der Brennstoff-Brennkraftmaschine verbindbar ist. Die Brennerzelle weist eine Selbstzündungskammer auf. Dabei wird ein gasförmiges Brennstoffgemisch in die Kammer eines Zylinders der Brennkraftmaschine eingeleitet, das gasförmige Brennstoffgemisch mittels eines hin- und hergehenden beweglichen Kolbens in dem Zylinder komprimiert und das komprimierte Brennstoffgemisch an der oberen Stelle des Kompressionshubes in der Zylinderkammer mittels der Brennstoffbrennerzelle gezündet, die außerhalb des Zylinders angeordnet ist. Ein Teil des komprimierten gasförmigen Gemisches wird in die Brennerzelle über eine Einlasseinrichtung eingeleitet, die mit der Zylinderkammer in Verbindung steht. In die Zelle wird ein selbstzündender fluidförmiger Brennstoff eingeleitet, um die Zündung des Fluidbrennstoffes beim Kontakt mit dem komprimierten Gemisch und die Zündung des komprimierten gasförmigen Gemisches in der Zylinderkammer über die Öffnungseinrichtung zu bewirken.

Die US 2,714,883 A beschreibt ein pneumatisches Startsystem für einen Großgasmotor, wobei zur Zündung des Gemisches in den Brennraum eine Startzündkerze einmündet.

Aus der WO 01/86128 A2 ist eine aufgeladene Diesel-Gasbrennkraftmaschine bekannt, welche stromaufwärts eines Laders einen Gasmischer aufweist.

Bei Großgasmotoren erfolgt üblicherweise die Gemischbildung direkt im Einlasssystem oder in einem zentralen Gasmischer stromaufwärts des Abgasturboladers. Das Gemisch wird im Abgasturbolader verdichtet, und nach Basieren des Ladeluftkühlers über die Ladegemischleitung den einzelnen Zylindern zugeführt. Beim Startvorgang mit Druckluft würde das Gas/Luft-Gemisch durch die Druckluft derart verdünnt werden, dass die Brennkraftmaschine nicht zünden und damit auch nicht starten würde.

Aufgabe der Erfindung ist es, diese Nachteile zu vermeiden und ein zuverlässiges Starten auch bei niedrigen Temperaturen bei einer mit Brenngas betriebenen Brennkraftmaschine zu ermöglichen.

Erfindungsgemäß wird dies dadurch erreicht, dass folgende Schritte durchgeführt werden:
- Vorwärmen von Vorkammern zumindest einer ersten Gruppe von Zylindern auf eine definierte Vorwärmtemperatur;
- Einblasen von Druckluft zu Beginn des Startvorganges in alle Zylinder der ersten und zweiten Gruppe von Zylindern, solange die Drehzahl der Brennkraftmaschine eine definierte Losbrechdrehzahl unterschreitet;
- Deaktivieren der Druckluftzufuhr zur ersten Gruppe von Zylindern bei Überschreiten der Losbrechdrehzahl;
- Einbringen von selbstzündendem Pilot-Kraftstoff in die Vorkammern der ersten Gruppe von Zylindern, wenn die Losbrechdrehzahl erreicht wird, und Zünden des Gas/Luft-Gemisches in den Zylinderräumen dieser Zylinder mittels des selbstzündenden Pilot-Kraftstoffes, wobei zuerst nur die erste Gruppe von Zylindern gefeuert betrieben wird, während in die zweite Gruppe von Zylindern weiterhin Druckluft eingeblasen wird;
- Einbringen von selbstzündendem Pilot-Kraftstoff auch in die Vorkammern der zweiten Gruppe von Zylindern und Zünden des Gas/Luft-Gemisches in den Zylinderräumen dieser Zylinder mittels des selbstzündenden Pilot-Kraftstoffes, wenn eine definierte Startdrehzahl erreicht wird, wobei die Druckluftzufuhr zur zweiten Gruppe von Zylindern nach Zünden des eingeblasenen Gas/Luft-Gemisches in den Zylinderräumen gestoppt wird.

Um bei niedrigen Wandtemperaturen der Vorkammer und/oder der Zylinderräume ein Zünden des eingespritzten Pilot-Kraftstoffes und des Gas/Luft-Gemisches zu ermöglichen, ist es vorteilhaft, wenn die Vorwärmung der Vorkammer elektrisch über einen Kühlkreislauf, vorzugsweise auf etwa 80°C bis 100°C erfolgt, wobei besonders vorzugsweise während der Vorwärmphase ein Wärmetauscher des Kühlkreislaufes umgangen wird. Weiters kann vorgesehen sein, dass vor dem Motorstart die Brennkraftmaschine mittels einer Vorwärmepumpe und/ oder einer Vorschmierpumpe, vorzugsweise auf 40°C bis 60°C, vorgewärmt wird.

Besonders vorteilhaft ist es dabei, wenn bei Überschreiten der Losbrechdrehzahl die Druckluftzufuhr zur ersten Gruppe von Zylindern deaktiviert wird, wobei vorzugsweise die Losbrechdrehzahl etwa 50% der Startdrehzahl beträgt.

Vorzugsweise ist vorgesehen, dass in der durch die Kurbelwelle vorgegebenen Zündreihenfolge die Zylinder abwechselnd der einen Gruppe und der anderen Gruppe zugeordnet werden.

Somit werden anfänglich alle Zylinder mit Druckluft beaufschlagt, um das Losbrechmoment zu überwinden und eine vorher festgelegte Losbrechdrehzahl zu erreichen. Bei Erreichen der Losbrechdrehzahl wird bei der Hälfte der Zylinder, und zwar bei jedem zweiten Zylinder in der durch die Kurbelwelle vorgegebenen Zündreihenfolge, die Startluftzufuhr mittels Druckluftventile in den Druckluftzuführleistungen zu den Zylindern unterbrochen. In den von der Startluftversorgung getrennten Zylindern kann das angesaugte Gas/Luft-Gemischt eines über die Vorkammern in die Zylinderräume der ersten Gruppe von Zylindern eingebrachten selbstzündenden Pilot-Kraftstoffes entflammt werden und somit der Motor gestartet werden. Bei Erreichen einer motorspezifischen Startdrehzahl wird auch die Druckluftzufuhr zu den verbliebenen Zylindern gestoppt, so dass auch in diesen Zylindern die Verbrennung durch Zünden des eingeblasenen Gas/Luft-Gemisches in den Zylinderräumen der zweiten Gruppe von Zylindern mittels des in die Zylinderräume der zweiten Gruppe von Zylindern eingebrachten selbstzündenden Pilot-Kraftstoffes beginnen kann. Dabei wird Pilot-Kraftstoff durch Düsenlöcher aus der Vorkammer in den durch den Zylinderraum gebildeten Hauptbrennraum eingebracht.

Um den Vorgang des Hochfahrens zu Beschleunigen, kann weiters vorgesehen sein, dass zumindest zeitweise während des Startvorganges, Druckluft vor der Turbine und/oder vor dem Lader eines Abgasturboladers eingeblasen wird. Der Einblasevorgang von Druckluft vor der Turbine oder vor dem Lader wird wieder gestoppt, sobald das Gas/Luft-Gemisch in den Zylinderräumen der Zylinder zündet.

Die Erfindung wird im Folgenden anhand der Fig. näher erläutert.

Die Fig. zeigt eine Brennkraftmaschine mit in Reihe angeordneten Zylindern 1 bis 6, wobei die Zylinder 2, 3 und 6 einer ersten Gruppe A und die Zylinder 2, 4 und 6 einer zweiten Gruppe B zugeordnet sind. Die Brennkraftmaschine ICE weist ein Einlasssystem I und ein Auslasssystem E auf. Das brennbare Gas/Luft-Gemisch wird stromaufwärts eines Laders 7 eines Abgasturboladers 8 in einem Gasmischer 9 gebildet, wobei die zugeführte Luft mit Bezugszeichen 10, das eingebrachte Brenngas mit Bezugszeichen 11 und das Gas/Luft-Gemisch mit Bezugszeichen 12 angedeutet ist. Das Gas/Luft-Gemisch 12 wird über den Lader 7 und einen Ladeluftkühler 13 den einzelnen Zylindern 1 bis 6 zugeführt. Zur Zündung des Gas/Luft-Gemisches 12 während des Betriebes ist ein Common-Rail-System 14 zur Einspritzung von selbstzündendem Pilot-Kraftstoff vorgesehen, wobei jeweils pro Zylinder 1 bis 6 Pilot-Kraftstoff in eine in den Zylinderraum mündende Vorkammer 15 eingespritzt wird, welche Vorkammer 15 mit dem durch den Zylinderraum gebildeten Hauptbrennraum über Einspritzbohrungen strömungsverbunden ist. Der beispielsweise durch Diesel gebildete Pilot-Kraftstoff gelangt über die Düsenbohrungen in den Hauptbrennraum und entzündet dort das Gas/LuftGemisch.

Zum Starten der Brennkraftmaschine ICE ist ein Druckluftsystem 16 mit einer Druckluftquelle 17 vorgesehen, welche über eine Druckluftversorgungsleitung 18 und Druckluftzuführleitungen 19 mit den einzelnen Zylindern 1 bis 6 strömungsverbindbar ist. In den Druckluftzuführleitungen 19 ist dabei jeweils ein beispielsweise durch ein Magnetventil gebildetes Druckluftventil 20 und ein Rückschlagventil 21 angeordnet, wobei die Druckluftzuführleitungen 19 in den jeweiligen Zylinderraum jedes Zylinders 1 bis 6 münden.

Da das Gasbrennverfahren mit Pilot-Kraftstoffeinspritzung (Micro-Pilot-Verfahren) beim Start aufgrund der niedrigen Wandtemperaturen in den Vorkammern 15 nicht oder nur unzuverlässig funktioniert, wird folgender Startablauf konzipiert:
- elektrische Vorwärmung der Brennkraftmaschine ICE mittels des Zylinderkühlwasserkreises mit einer Vorwärmpumpe und mittels des Schmierkreises mit einer Vorschmierpumpe (Schmieröl) auf etwa 45°C bis 50°C (nicht dargestellt);
- elektrische Vorwärmung der Vorkammern 15 über den Kühlkreislauf 23 auf etwa 90°C bis 100°C, wobei der nicht weiter dargestellte Wärmetauscher zum Niedertemperatur-Kühlsystem umgangen wird;
- die Drosselklappe 24 im Einlasssystem E wird voll geöffnet, das Absperrventil 25 einer Umgehungsleitung 26 für den Lader 7 bleibt geschlossen;
- Freigabe und Öffnung der Luftzufuhr 10, die Zuführung des Brenngases 11 am Gasmischer 9 bleibt geschlossen;
- Vorschmierpumpe wird ausgeschaltet, Kühlwasservorwärmpumpe bleibt eingeschaltet;
- Hauptschmierölpumpe wird eingeschaltet, Zylinderkühlwasserpumpe bleibt ausgeschaltet;
- Freigabe für Druckluft (Startluft) aus dem Druckluftsystem 16 anfänglich für alle Zylinder 1 bis 6, bei Überschreiten einer Losbrechdrehzahl n₁ nur mehr für die zweite Gruppe B von Zylindern 1, 4, 5; die erste Gruppe A von Zylindern 2, 3, 6 wird dabei durch bereits gefeuert betrieben, wobei Pilot-Kraftstoff mit maximal möglicher Menge in die Vorkammern 15 der ersten Gruppe eingespritzt wird;
- bei Erreichen der Startdrehzahl n₂ erfolgt die Freigabe der Pilot-Kraftstoffeinspritzung mit maximal möglicher Menge für alle Zylinder 1 bis 6;
- gleichzeitig wird das Zufuhrventil 27 auf vorgegebenen Sollwert geöffnet;
- dabei erfolgt auch gleichzeitig die Luftfreigabe für die druckluftunterstützte turbinenseitige Anfahreinrichtung 28 des Abgasturboladers 8 aus der Druckluftquelle 17 (optional ist auch eine zusätzliche Unterstützung stromaufwärts des Laders 7 für Förderung des Gas-Luft-Gemisches in die Zylinder 1 bis 6 möglich);
- nach Zündung in den Zylindern 1 bis 6 und beginnendem Hochlauf wird die Zufuhr der Druckluft auch für die verbleibenden Zylinder 1, 4, 5 mit den Druckluftventilen 20 geschlossen und die Druckluftzufuhr zur Anfahreinrichtung 28 mittels des Ventils 29 unterbrochen;
- bei Erreichen einer stabilen Drehzahl wird Vorkammerkühlkreislauf auf Niedertemperatur-Wärmetauscher umgestellt und die Pilot-Kraftstoffmenge auf einen Standardwert von ca. 1% reduziert;
- Zylinderkühlwasserhauptpumpe wird aktiviert und die Kühlwasservorwärmpumpe deaktiviert;
- Gaszufuhrventil 27 und Drosselklappe 24 werden entsprechend den Betriebsanforderungen auf Regelbetrieb umgestellt;
- die Brennkraftmaschine ICE wird auf Synchronisierdrehzahl hochgefahren
- nach Synchronisieren erfolgt die Lastaufnahme und Hochfahren der Brennkraftmaschine entsprechend der Belastungskurve.

Um ein sicheres Starten der Brennkraftmaschine ICE zu ermöglichen, werden zu Beginn des Startvorganges während des Aufwärmvorganges bei stillstehender Kurbelwelle alle Zylinder 1 bis 6 mit Druckluft beaufschlagt, um dass Losbrechmoment zu überwinden und eine vorher festgelegte Losbrechdrehzahl n₁ zu erreichen, welche beispielsweise 50% der typischen Startdrehzahl n₂ sein kann. Bei Erreichen der Losbrechdrehzahl n₁ werden die Zylinder 2, 3 und 6 der ersten Gruppe A mittels der Druckluftventile 20 von der Druckluftversorgung getrennt, wodurch in den Zylinderräumen die Verdünnung des eingebrachten Gas/Luft-Gemisches durch die Druckluft aufhört und somit ein zündfähiges Gas/Luft-Gemisch entsteht. Durch Einspritzen von Pilot-Kraftstoff in die Vorkammern 15 kann in den Zylindern 2, 3 und 6 der ersten Gruppe A das angesaugte Gas/LuftGemisch entflammt und damit die Brennkraftmaschine ICE gestartet werden. Ab Überschreiten der motorspezifischen Startdrehzahl n₂ wird auch die Druckluftzufuhr zu den verbliebenen Zylindern 1, 4, 5 der zweiten Gruppe B gestoppt, so dass auch in diesen Zylindern die Verbrennung durch Einspritzen und Zünden von Pilot-Kraftstoff beginnen kann. Nach Aufwärmen und dem Beginn der Lastaufnahme der Brennkraftmaschine ICE werden Pilot-Kraftstoffeinspritzmenge, Luft/Gas-Gemisch und Kühlung auf die betriebsmäßigen Normalwerte eingestellt.

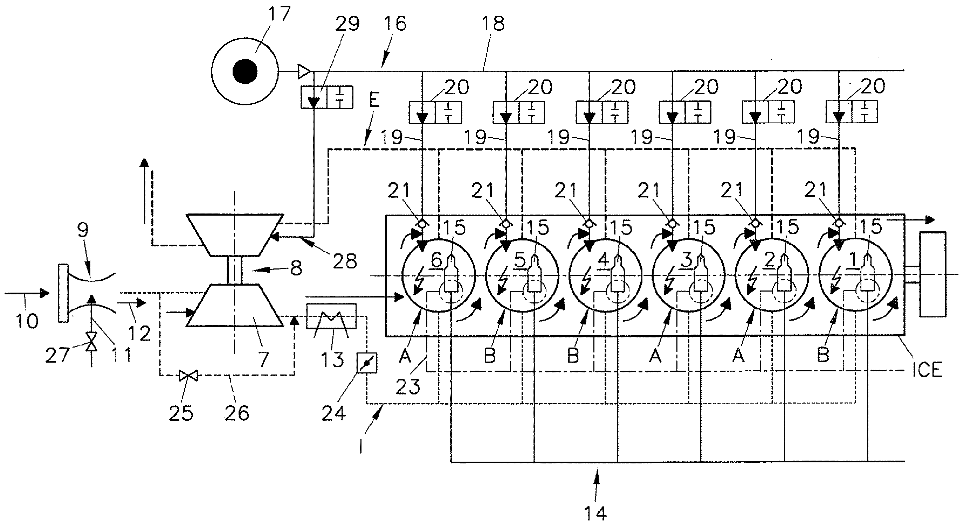

## Patentansprüche

1. Verfahren zum Starten einer mit Brenngas betriebenen Brennkraftmaschine (ICE) mit innerer Verbrennung, insbesondere eines Großgasmotors, wobei die Bildung eines brennbaren Gas/Luft-Gemisches im Einlasssystem (I), insbesondere in einem Gasmischer (9) stromaufwärts eines Laders (7), erfolgt, wobei während der Startphase in die Zylinderräume zumindest einer Gruppe (A; B) von Zylindern (1, 4, 5; 2, 3, 6) mit Vorkammern (15) zumindest zeitweise Druckluft eingeblasen wird, **dadurch gekennzeichnet, dass** folgende Schritte durchgeführt werden:
- Vorwärmen von Vorkammern zumindest einer ersten Gruppe (A) von Zylindern (2, 3, 6) auf eine definierte Vorwärmtemperatur;
- Einblasen von Druckluft zu Beginn des Startvorganges in alle Zylinder (1, 2, 3, 4, 5, 6) der ersten und zweiten Gruppe (A, B) von Zylindern (1, 2, 3, 4, 5, 6), solange die Drehzahl der Brennkraftmaschine (ICE) eine definierte Losbrechdrehzahl (n₁) unterschreitet;
- Deaktivieren der Druckluftzufuhr zur ersten Gruppe (A) von Zylindern (2, 3, 6) bei Überschreiten der Losbrechdrehzahl (n₁);
- Einbringen von selbstzündendem Pilot-Kraftstoff in die Vorkammern der ersten Gruppe (A) von Zylindern (2, 3, 6), wenn die Losbrechdrehzahl (n₁) erreicht wird, und Zünden des Gas/ Luft-Gemisches in den Zylinderräumen dieser Zylinder (2, 3, 6) mittels des selbstzündenden Pilot-Kraftstoffes, wobei zuerst nur die erste Gruppe (A) von Zylindern (2, 3, 6) gefeuert betrieben wird, während in die zweite Gruppe (B) von Zylindern (1, 4, 5) weiterhin Druckluft eingeblasen wird;
- Einbringen von selbstzündendem Pilot-Kraftstoff auch in die Vorkammern der zweiten Gruppe (B) von Zylindern (1, 4, 5) und Zünden des Gas/Luft-Gemisches in den Zylinderräumen dieser Zylinder (1, 4, 5) mittels des selbstzündenden Pilot-Kraftstoffes, wenn eine definierte Startdrehzahl (n₂) erreicht wird, wobei die Druckluftzufuhr zur zweiten Gruppe (B) von Zylindern (1, 4, 5) nach Zünden des eingeblasenen Gas/Luft-Gemisches in den Zylinderräumen gestoppt wird.

2. Verfahren nach Anspruch 1, **dadurch gekennzeichnet, dass** die Losbrechdrehzahl (n₁) etwa 50% der Startdrehzahl (n₂) beträgt.

3. Verfahren nach Anspruch 1 oder 2, **dadurch gekennzeichnet, dass** in der durch die Kurbelwelle vorgegebenen Zündreihenfolge die Zylinder abwechselnd der einen Gruppe (A; B) und der anderen Gruppe (B; A) zugeordnet werden.

4. Verfahren nach einem der Ansprüche 1 bis 3, **dadurch gekennzeichnet, dass** zumindest zeitweise während des Startvorganges Druckluft stromaufwärts einer Turbine (7) und/oder stromaufwärts des Laders (7) eines Abgasturboladers (8) eingeblasen wird, wobei vorzugsweise das Einblasen von Druckluft gestoppt wird, sobald das Gas/Luft-Gemisch in den Zylinderräumen der Zylinder (1, 2, 3, 4, 5, 6) zündet.

5. Verfahren nach einem der Ansprüche 1 bis 4, **dadurch gekennzeichnet, dass** die Vorwärmung der Vorkammer (15) elektrisch über einen Kühlkreislauf (23), vorzugsweise auf etwa 80°C bis 100°C erfolgt, wobei besonders vorzugsweise während der Vorwärmphase ein Wärmetauscher des Kühlkreislaufes (23) umgangen wird.

6. Verfahren nach einem der Ansprüche 1 bis 5, **dadurch gekennzeichnet, dass** vor dem Motorstart die Zylinderräume der Brennkraftmaschine (ICE) mittels einer Vorwärmepumpe und/oder einer Vorschmierpumpe, vorzugsweise auf 40°C bis 60°C, vorgewärmt wird.

## Claims

1. Method for starting an internal combustion engine (ICE) which is operated with combustion gas and has internal combustion, in particular a large gas engine, wherein a combustible gas-air mixture is formed in the inlet system (I), in particular in a gas mixer (9) upstream of a supercharger (7), wherein during the starting phase compressed air is injected at least temporarily into the cylinder spaces of at least one group (A; B) of cylinders (1, 4, 5; 2, 3, 6) with prechambers (15), **characterised in that** the following steps are carried out:
- preheating prechambers of at least one first group (A) of cylinders (2, 3, 6) to a defined preheating temperature;
- injecting compressed air into all cylinders (1, 2, 3, 4, 5, 6) of the first and second group (A, B) of cylinders (1, 2, 3, 4, 5, 6) at the start of the starting process as long as the rotational speed of the internal combustion engine (ICE) falls below a defined breakaway rotational speed (n1);
- deactivation of the compressed air supply to the first group (A) of cylinders (2, 3, 6) when the breakaway speed (n1) is exceeded;
- introducing self-igniting pilot fuel into the prechambers of the first group (A) of cylinders (2, 3, 6) when the breakaway speed (n1) is reached and igniting the gas-air mixture in the cylinder spaces of those cylinders (2, 3, 6) by means of the self-igniting pilot fuel, wherein first only the first group (A) of cylinders (2, 3, 6) is operated in a fired manner, while compressed air is further blown into the second group (B) of cylinders (1, 4, 5);
- introducing self-igniting pilot fuel also into the prechambers of the second group (B) of cylinders (1, 4, 5) and igniting the gas-air mixture in the cylinder spaces of these cylinders (1, 4, 5) by means of the self-igniting pilot fuel when a defined starting speed (n₂) is reached, wherein the compressed air supply to the second group (B) of cylinders (1, 4, 5) is stopped after ignition of the injected gas-air mixture in the cylinder spaces.

2. Method according to claim 1, **characterised in that** the breakaway speed (n₁) is about 50% of the starting speed (n₂).

3. Method according to claim 1 or 2, **characterised in that,** in the ignition sequence predetermined by the crankshaft, the cylinders are assigned alternately to the one group (A; B) and to the other group (B; A).

4. Method according to one of claims 1 to 3, **characterised in that** compressed air is injected at least temporarily during the starting process upstream of a turbine and/or upstream of the supercharger (7) of an exhaust gas turbocharger (8), wherein preferably the injection of compressed air is stopped as soon as the gas-air mixture in the cylinder spaces of the cylinders (1, 2, 3, 4, 5, 6) ignites.

5. Method according to one of claims 1 to 4, **characterised in that** the preheating of the prechamber (15) takes place electrically via a cooling circuit (23), preferably to approximately 80°C to 100°C, wherein a heat exchanger of the cooling circuit (23) is bypassed particularly preferably during the preheating phase.

6. Method according to one of claims 1 to 5, **characterised in that,** before the engine is started, the cylinder spaces of the internal combustion engine (ICE) are preheated by means of a preheating pump and/or a prelubrication pump, preferably to 40°C to 60°C.

## Revendications

1. Procédé de démarrage d'un moteur à combustion interne (ICE) entraîné par un gaz combustible en particulier d'un gros moteur à gaz selon lequel la formation d'un mélange gaz / air combustible s'effectue dans le système d'admission (I), en particulier dans un mélangeur de gaz (9) en amont d'un compresseur (7), et pendant la phase de démarrage dans les chambres d'au moins un groupe (A, B) de cylindres (1, 4, 5 ; 2, 3, 6) équipés d'une préchambre (15) de l'air sous pression est injecté au moins par intermittence,
**caractérisé en ce qu'**
on met en œuvre les étapes suivantes consistant à :
- préchauffer les préchambres d'au moins un premier groupe (A) de cylindres (2, 3, 6) à une température de préchauffage définie,
- au début du processus de démarrage injecter l'air sous pression dans tous les cylindres (1, 2, 3, 4, 5, 6) du premier et du second groupes (A, B) de cylindres (1, 2, 3, 4, 5, 6) tant que la vitesse de rotation du moteur à combustion interne (ICE) est située au-dessous d'une vitesse de rotation de rupture (n₁) définie,
- désactiver l'alimentation en air sous pression du premier groupe (A) de cylindres (2, 3, 6) lors du dépassement de la vitesse de rotation de rupture (n₁),
- introduire un carburant pilote d'autoallumage dans les préchambres du premier groupe (A) de cylindres (2, 3, 6) lorsque la vitesse de rotation de rupture (n₁) est atteinte et allumer le mélange gaz / air dans les chambres de ces cylindres (2, 3, 6) au moyen du carburant pilote d'autoallumage, seul le premier groupe (A) de cylindres (2, 3, 6) étant actionné en étant tout d'abord allumé alors que dans le second groupe (B) de cylindres (1, 4, 5) de l'air sous pression est encore injecté,
- introduire également du carburant pilote d'autoallumage dans les préchambres des cylindres du second groupe (B) de cylindres (1, 4, 5) et enflammer le mélange gaz/air dans les chambres de ces cylindres (1, 4, 5) au moyen du carburant pilote d'autoallumage lorsqu'une vitesse de rotation de démarrage (n₂) définie est atteinte, l'alimentation en air sous pression des cylindres du second groupe (B) de cylindres (1, 4, 5) étant arrêtée après l'allumage du mélange gaz / air soufflé dans les chambres des cylindres.

2. Procédé conforme à la revendication 1,
**caractérisé en ce que**
la vitesse de rotation de rupture (n₁) est égale à environ 50% de la vitesse de rotation de démarrage (n₂).

3. Procédé conforme à l'une des revendications 1 et 2,
**caractérisé en ce que**
lors de la succession d'allumages prédéfinie par le vilebrequin, les cylindres sont alternativement associés à l'un des groupes (A, B) et à l'autre groupe (B, A).

4. Procédé conforme à l'une des revendications 1 à 3,
**caractérisé en ce que**
pendant le processus de démarrage, de l'air sous pression est injecté au moins par intermittence en amont d'une turbine (7) et/ou en amont du compresseur (7) d'un turbo-compresseur de suralimentation des gaz d'échappement (8) et de préférence l'injection d'air sous pression est arrêtée dès que le mélange gaz / air s'allume dans les chambres des cylindres (1, 2, 3, 4, 5, 6).

5. Procédé conforme à l'une des revendications 1 à 4,
**caractérisé en ce que**
le préchauffage des préchambres (15) est effectué électriquement par l'intermédiaire d'un circuit de refroidissement (23), de préférence à environ 80°C à 100°C, et de façon particulièrement préférentielle, pendant la phase de préchauffage un échangeur de chaleur du circuit de refroidissement (23) est contourné.

6. Procédé conforme à l'une des revendications 1 à 5,
**caractérisé en ce qu'**
avant le démarrage les chambres des cylindres du moteur à combustion interne (ICE) sont préchauffées de préférence à 40°C à 60°C au moyen d'une pompe de préchauffage et/ou d'une pompe de pré-lubrification.
